# EUROPEAN PATENT APPLICATION

(11) **EP 4 053 769 A1**
(43) Date of publication of application: **07.09.2022**
(21) Application number: 20882638.8
(22) Date of filing: 07.07.2020
(51) Int. Cl.: G06Q 10/08

(54) **BAGGAGE DELIVERY SYSTEM, BAGGAGE DELIVERY MANAGEMENT DEVICE, BAGGAGE DELIVERY METHOD, AND COMPUTER PROGRAM**

(30) Priority: 31.10.2019 JP 2019198877
(71) Applicant: NEC Corporation, 108-8001 Tokyo (JP)
(72) Inventor: YAMAGUCHI, Tomohiro, Tokyo 108-8001 (JP); TSUKAHARA, Takafumi, Tokyo 108-8001 (JP)
(74) Representative: Betten & Resch
(86) International application number: PCT/JP2020/026590
(87) International publication number: WO 2021/084806

(57) **Abstract**

A baggage delivery system includes: an acquisition unit that obtains an accommodation information about accommodations of a customer on the basis of a customer information, which is information about the customer who uses a facility; a delivery unit that performs a procedure for delivering baggage of the customer from the facility to the accommodations on the basis of the accommodation information; and a giving unit that gives a completion information indicating that delivery of the baggage is completed, to the accommodation information, when the delivery of the baggage to the accommodations is completed.

## Description

### Technical Field

The present invention relates to a baggage delivery system, a baggage delivery management apparatus, a baggage delivery method, and a computer program that deliver a customers' baggage.

### Background Art

A known system of this type manages the delivery of baggage to accommodations. For example, Patent Literature 1 discloses a technique/technology of delivering baggage left in charge from a user of an airport to an accommodation hotel. Patent Literature 2 discloses a technique/technology of requesting the delivery by making a delivery label from information about accommodations. Patent Literature 3 discloses a technique/technology of delivering baggage to accommodations while traveling, and handing over the baggage by performing identity verification at the time of receipt.

### Citation List

### Patent Literature

Patent Literature 1: JP2009-205290A
Patent Literature 2: JP2010-134853A
Patent Literature 3: JP2007-052624A

### Summary

### Technical Problem

After the delivery of baggage, it is preferable to perform the identify verification or the like for a customer, for example, so as not to hand over the baggage to a wrong person. In this case, the customer is required to work for the identity verification. For example, the customer is required to input information (e.g., a delivery number, etc.) that allows the identity verification. The occurrence of such work increases the customer's labor and causes the customer to feel troublesome.

In view of the problems described above, it is therefore an example object of the present invention to provide a baggage delivery system, an accommodation management apparatus, a baggage delivery method, and a computer program that allow a customers' baggage to be properly delivered to accommodations.

### Solution to Problem

A baggage delivery system according to an example aspect of the present invention includes: an acquisition unit that obtains an accommodation information about accommodations of a customer on the basis of a customer information, which is information about the customer who uses a facility; a delivery unit that performs a procedure for delivering baggage of the customer from the facility to the accommodations on the basis of the accommodation information; and a giving unit that gives a completion information indicating that delivery of the baggage is completed, to the accommodation information, when the delivery of the baggage to the accommodations is completed.

A baggage delivery management apparatus according to an example aspect of the present invention includes: an acquisition unit that obtains an accommodation information about accommodations of a customer on the basis of a customer information, which is information about the customer who uses a facility; a delivery instruction unit that outputs an instruction to perform a procedure for delivering baggage of the customer from the facility to the accommodations on the basis of the accommodation information; and a giving unit that gives a completion information indicating that delivery of the baggage is completed, to the accommodation information, when the delivery of the baggage to the accommodations is completed.

A facility management method according to an example aspect of the present invention includes: obtaining an accommodation information about accommodations of a customer on the basis of a customer information, which is information about the customer who uses a facility; performing a procedure for delivering baggage of the customer from the facility to the accommodations on the basis of the accommodation information; and giving a completion information indicating that delivery of the baggage is completed, to the accommodation information, when the delivery of the baggage to the accommodations is completed.

A computer program according to an example aspect of the present invention allows a computer: to obtain an accommodation information about accommodations of a customer on the basis of a customer information, which is information about the customer who uses a facility; to perform a procedure for delivering baggage of the customer from the facility to the accommodations on the basis of the accommodation information; and to give a completion information indicating that delivery of the baggage is completed, to the accommodation information, when the delivery of the baggage to the accommodations is completed.

### Effect of the Invention

According to the baggage delivery system, the baggage delivery management apparatus, the baggage delivery method, and the computer program according to the example embodiments described above, the customer's baggage can be properly delivered to accommodations.

### Brief Description of Drawings

[FIG. 1] FIG. 1 is a block diagram illustrating a specific configuration of a baggage delivery system according to a first example embodiment.
[FIG. 2] FIG. 2 is a block diagram illustrating a hardware configuration of a baggage delivery management apparatus according to the first example embodiment.
[FIG. 3] FIG. 3 is a conceptual diagram illustrating a flow of overall operation by the baggage delivery system according to the first example embodiment.
[FIG. 4] FIG. 4 is a flowchart illustrating a flow of operation of baggage delivery by the baggage delivery system according to the first example embodiment.
[FIG. 5] FIG. 5 is a flowchart illustrating a flow of operation of check-in by the baggage delivery system according to the first example embodiment.
[FIG. 6] FIG. 6 is a flowchart illustrating a flow of operation of checkout by the baggage delivery system according to the first example embodiment.
[FIG. 7] FIG. 7 is a flowchart illustrating a flow of operation of baggage delivery by a baggage delivery system according to a second example embodiment.
[FIG. 8] FIG. 8 is a flowchart illustrating a flow of operation of check-in by the baggage delivery system according to the second example embodiment.

### Description of Example embodiments

Referring now to the drawings, a baggage delivery system, a baggage delivery management apparatus, a baggage delivery method, and a computer program according to example embodiments will be described.

### <First Example Embodiment

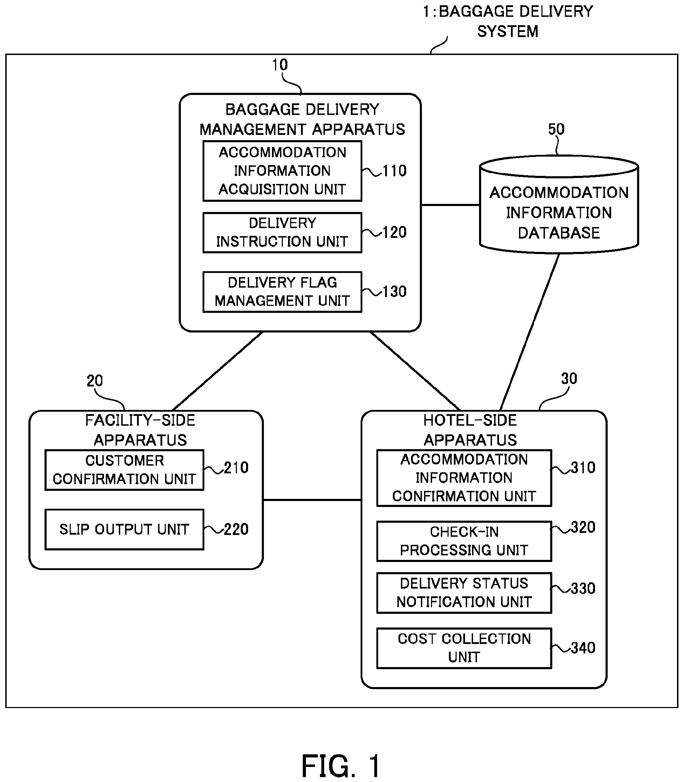

A baggage delivery system according to a first example embodiment will be described with reference to FIG. 1 to FIG. 6.

### (System Configuration)

Firstly, a specific system configuration of the baggage delivery system according to the first example embodiment will be described with reference to FIG. 1. FIG. 1 is a block diagram illustrating a specific configuration of the baggage delivery system according to the first example embodiment.

As illustrated in FIG. 1, a baggage delivery system 1 according to the first example embodiment includes a baggage delivery management apparatus 10, a facility-side apparatus 20, a hotel-side apparatus 30, and an accommodation information database 50.

The baggage delivery management apparatus 10 is an apparatus that manages the work of delivering baggage of a customer who uses a facility, to the customer's accommodations, and is configured, for example, as a server, cloud, or the like, which is owned by a data center or the like that performs overall management of the baggage delivery system 1. The "facility" here is a facility used before checking in at a hotel by the customer who uses the baggage delivery system 1, and includes, for example, a transportation hub or a traffic base such as an airport, a station, and a bus terminal, another hotel spending the night before, and a retail store, and the like. The baggage delivery management apparatus 10 includes an accommodation information acquisition unit 110, a delivery instruction unit 120, and a delivery flag management unit 130, as components for realizing its functions.

The accommodation information acquisition unit 110 is configured to obtain the customer's accommodation information from the accommodation information database 50. The "accommodation information" here is information about a guest who stays at a hotel, and includes, for example, an accommodation reservation information, a personal information about the guest, and a hotel information such as a hotel name and a hotel residence, and the like.

The delivery instruction unit 120 is configured to output an instruction to deliver the customer's baggage to the accommodations on the basis of the accommodation information obtained by the accommodation information acquisition unit 110. The instruction by the delivery instruction unit 120 is configured to be outputted to the facility-side apparatus 20.

The delivery flag management unit 130 is configured to give a flag indicating a baggage delivery status to the accommodation information stored in the accommodation information database 50. Specifically, the delivery flag management unit 130 turns ON a delivery completion flag (i.e., a flag indicating delivery completion) in the customer's accommodation information when the delivery of the baggage left in charge from the customer is completed. Incidentally, information about whether or not the baggage delivery is completed can be obtained, for example, in cooperation with a transport management server (e.g., a server of a company that manages the delivery of baggage).

The facility-side apparatus 20 is an apparatus installed in the facility used by the customer, and is configured to enable a procedure for delivering the baggage left in charge from the customer to the customer's accommodations. The facility-side apparatus 20 includes a customer confirmation unit 210 and a slip output unit 220, as components for realizing its functions.

The customer confirmation unit 210 is configured to perform identification (in other words, identity verification) of the customer who uses the facility. The customer verification unit 210 may identify the customer, for example, by using a face authentication. In this situation, the facility-side apparatus 20 identifies the customer by collating a face image of the customer captured by a camera provided in the facility with a pre-registered face image. For the face authentication, the face image itself may be used, or a feature quantity extracted from the face image may be used. A function related to the face authentication may be implemented on an external apparatus of the facility-side apparatus. The customer confirmation unit 210 is configured to identify the customer, thereby obtaining information about the customer (hereinafter referred to as a "customer information") associated with the customer. An example of the customer information includes a customer ID, a customer name, or the like. The customer confirmation unit 210 is configured to transmit the customer information about the identified customer to the baggage delivery management apparatus 10 (specifically, the accommodation information acquisition unit 110) and to inquire the customer's accommodation information. Incidentally, the customer confirmation unit 210 may obtain the information about the customer or the accommodation information from an inputted accommodation reservation number or the like, without performing the identification of the customer by the face authentication described above.

The slip output unit 220 is configured to perform the procedure for delivering the customer's baggage in accordance with the instruction from the delivery instruction unit 120 of the baggage delivery management apparatus 10. Specifically, the slip output unit 220 outputs a delivery slip on the basis of the accommodation information included in the instruction from the delivery instruction unit 120. The delivery of the customer's baggage is performed by using this delivery slip. Incidentally, the delivery slip may contain not only information necessary for the delivery such as the address of the accommodations, but also information for identifying the customer at the accommodations (a customer ID, an accommodation reservation number, etc.). The work of delivering the customer's baggage is performed by a transport company that has received a delivery request from the baggage delivery system 1.

The hotel-side apparatus 30 is an apparatus provided in the hotel that is the customer's accommodations, and is configured to enable a process or the like of handing over the delivered customers' baggage to the customer. The hotel-side apparatus 30 includes an accommodation information confirmation unit 310, a check-in processing unit 320, a delivery status notification unit 330, and a cost collection unit 340, as components for realizing its functions.

The accommodation information confirmation unit 310 is configured to obtain the accommodation information of the customer who visits the hotel from the accommodation information database 50, and to confirm the customer (e.g., confirm whether or not the customer is a guest, and confirm a room in which the customer stays, etc.).

The check-in processing unit 320 is configured to perform a check-in process for the customer who is confirmed to be a guest by the accommodation information confirmation unit 310.

The delivery status notification unit 330 is configured to give notification about a delivery status of the baggage left in charge at the facility, for the customer on whom the check-in process is performed. Specifically, when the delivery completion flag in the customer's accommodation information is ON, the delivery status notification unit 330 gives a notification that the delivery of the customer's baggage is completed. The delivery status notification unit 330 gives the notification that the baggage delivery is completed by changing the display of a check-in process display or the like, for example, in accordance with ON/OFF of the delivery completion flag. Alternatively, the delivery status notification unit 330 may use a GPS or a beacon installed in the hotel to notify a portable terminal (e.g., a smartphone, etc.) that the delivery is completed. Incidentally, a notification destination may be a staff of the hotel, or may be the customer himself or herself.

The cost collection unit 340 is configured to collect a delivery cost when the customer uses the delivery (i.e., baggage delivery from the facility to the accommodations) by the baggage delivery system 1, together with a cost incurred at the hotel (e.g., an accommodation fee and a service charge, etc.). More specifically, the cost collection unit 340 calculates a total cost obtained by summing up the cost incurred at the hotel and the delivery cost, for example, when the delivery completion flag is ON at the time of checkout. Then, the cost collection unit 340 collects the calculated total cost from the customer who checks out. At this time, a receipt describing both the cost incurred at the hotel and the delivery cost is outputted. Alternatively, a receipt describing the cost incurred at the hotel and a receipt describing the delivery cost may be outputted separately. In the case of a prepaid hotel (i.e., a hotel in which the accommodation fee is paid when checking-in), only the delivery cost may be collected at the time of checkout. Alternatively, if an additional cost is incurred at the hotel (e.g., when drinking beverages in a guest room, or when charging hotel meals or shopping to the room), the total cost obtained by summing up the additional cost and the delivery cost may be collected from the customer who checks out. Incidentally, when the customer moves to another place after checkout (e.g., when the customer moves to another hotel or the like), the procedure for delivering the baggage may be performed again at the time of checkout.

The accommodation information database 50 is configured as a database for storing the accommodation information about a plurality of users. The accommodation information database 50 is configured to output the accommodation information as appropriate, in response to a request from the accommodation information acquisition unit 110 and the accommodation information confirmation unit 310. Furthermore, the accommodation information database 50 is configured to store the accommodation information (in other words, update the accommodation information) to which the flag is given by the delivery flag management unit 130. The accommodation information database 50 may be configured to store the accommodation information about a plurality of hotels.

### (Hardware Configuration)

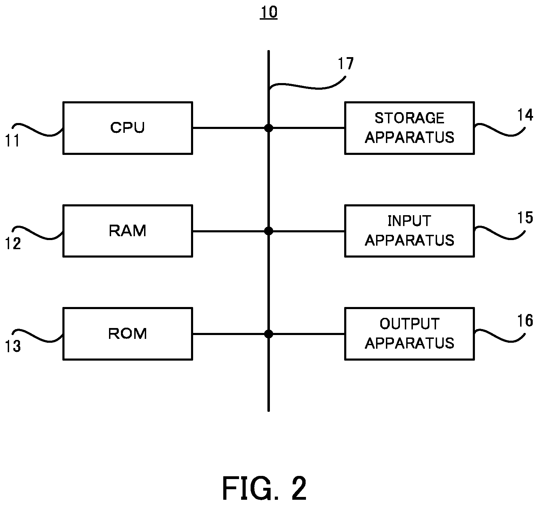

Next, a hardware configuration of the baggage delivery system 1 (especially, the baggage delivery management apparatus 10) according to the first example embodiment will be described with reference to FIG. 2. FIG. 2 is a block diagram illustrating the hardware configuration of the baggage delivery apparatus according to the first example embodiment.

As illustrated in FIG. 1, the baggage delivery management apparatus 10 included in the baggage delivery system 1 according to the first example embodiment includes a CPU (Central Processing Unit) 11, a RAM (Random Access Memory) 12, a ROM (Read Only Memory) 13, a storage apparatus 14, an input apparatus 15, and an output apparatus 16. The CPU 11, the RAM 12, the ROM 13, the storage apparatus 14, the input apparatus 15, and the output apparatus 16 are connected through a data bus 17.

The CPU 11 reads a computer program. For example, the CPU 11 may read a computer program stored by at least one of the RAM 12, the ROM 13 and the storage apparatus 14. For example, the CPU 11 may read a computer program stored by a computer readable recording medium, by using a not-illustrated recording medium read apparatus. The CPU 11 may obtain (i.e., load) a computer program from a not-illustrated apparatus located outside the baggage delivery administration apparatus 10, through a network interface. The CPU 11 controls the RAM 12, the storage apparatus 14, the input apparatus 15, and the output apparatus 16 by executing the read computer program. Especially in this example embodiment, when the CPU 11 executes the read computer program, a functional block for managing the baggage delivery is implemented in the CPU 11. In other words, the CPU 11 is configured to function as a controller for managing the baggage delivery, and for example, the accommodation information acquisition unit 110, the delivery instruction unit 120, and the delivery flag management unit 130 described above may be implemented in the CPU 11.

The RAM 12 temporarily stores the computer program to be executed by the CPU 11. The RAM 12 temporarily stores the data that is temporarily used by the CPU 11 when the CPU 11 executes the computer program. The RAM 12 may be, for example, D-RAM (Dynamic RAM).

The ROM 13 stores the computer program to be executed by the CPU 11. The ROM 13 may otherwise store fixed data. The ROM 13 may be, for example, a P-ROM (Programmable ROM).

The storage apparatus 14 stores the data that is stored for a long term by the baggage delivery administration apparatus 10. The storage apparatus 14 may operate as a temporary storage apparatus of the CPU 11. The storage apparatus 14 may include, for example, at least one of a hard disk apparatus, a magneto-optical disk apparatus, an SSD (Solid State Drive), and a disk array apparatus. Incidentally, the accommodation information database 50 described above may be configured as the storage apparatus 14.

The input apparatus 15 is an apparatus that receives an input instruction from a user of the baggage delivery management apparatus 10. The input apparatus 15 may include, for example, at least one of a keyboard, a mouse, a touch panel, a smart phone, and a tablet.

The output apparatus 16 is an apparatus that outputs information about the baggage delivery management apparatus 10 to the outside. For example, the output apparatus 16 may be a display apparatus that is configured to display the information about the baggage delivery management apparatus 10.

### (Outline of Operation)

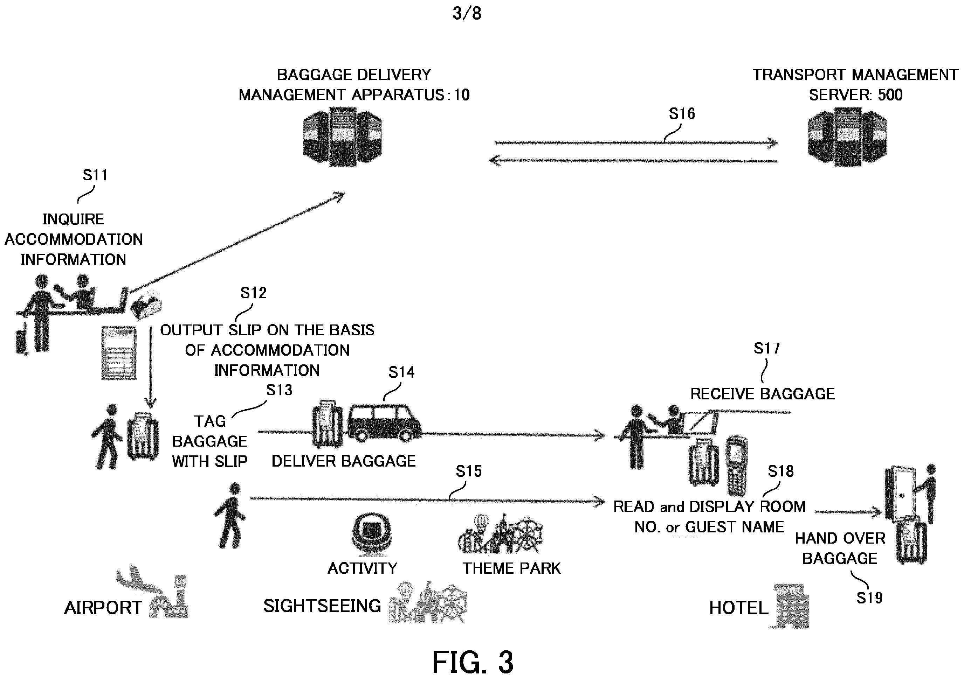

Next, an outline of operation realized by the baggage delivery system 1 according to the first example embodiment will be described with reference to FIG. 3. FIG. 3 is a conceptual diagram illustrating a flow of overall operation by the baggage delivery system according to the first example embodiment. Incidentally, in the following, an example in which baggage left in charge at an airport is delivered to a hotel will be described.

As illustrated in FIG. 3, when a passenger who uses the airport wishes to deliver baggage, firstly, an inquiry about the accommodation information is made to the baggage delivery management apparatus 10 (step S11). Then, the delivery slip is outputted on the basis of the obtained accommodation information (step S12), and the baggage is tagged with the delivery slip (step S13).

The baggage tagged with the delivery slip is delivered by a transport company to the accommodations (step S14). Incidentally, the customer who leaves the baggage can enjoy sightseeing, such as doing activities and enjoying at a theme park during that time (step S15). After the transport of the baggage is accepted, information about the transport is shared between the baggage delivery management apparatus 10 and the transport management server 500 (step S16).

A hotel that is the customer's accommodations receives the customer's baggage from the transport company (step S17). Then, when the delivery slip on the baggage is read, a guest name and a room number corresponding to the customer are displayed (step S18). A staff of the hotel hands over the baggage to the customer on the basis of the displayed information corresponding to the customer (step S19). The baggage may be handed over, for example, at a check-in counter in check-in, or may be carried in advance in a room where the customer stays. When the baggage is carried in the room where the customer stays, a display may indicate that.

Especially in the baggage delivery system 1 according to the first example embodiment, when the customer checks in at the hotel, a notification is given as to whether or not the baggage delivery is completed in accordance with the delivery completion flag given to the accommodation information. A specific method of giving such a notification will be described in detail below.

### (Operation of Baggage Delivery)

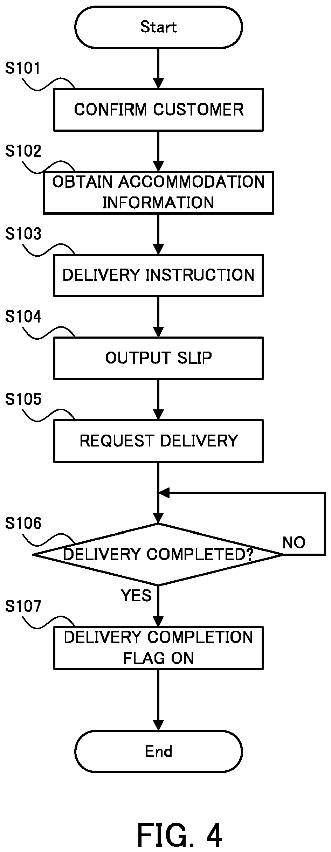

Next, a specific operation of baggage delivery by the baggage delivery system 1 according to the first example embodiment will be described with reference to FIG. 4. FIG. 4 is a flowchart illustrating a flow of the operation of baggage delivery by the baggage delivery system according to the first example embodiment.

As illustrated in FIG. 4, when baggage is delivered by the baggage delivery system 1, the customer confirmation unit 210 firstly performs the identify verification of the customer who intends to leave the baggage (step S101). The customer confirmation unit 210 obtains the customer information associated with the identified customer. The accommodation information acquisition unit 110 then obtains the accommodation information on the basis of the customer information about the identified customer (step S102). The delivery instruction unit 120 outputs a delivery instruction on the basis of the accommodation information obtained by the accommodation information acquisition unit 110 (step S103).

Then, the slip output unit 220 outputs the delivery slip in accordance with the delivery instruction (step S104) and requests the transport company to deliver the baggage (step S105). This initiates the work of delivering the baggage by the transport company.

Then, the delivery flag management unit 130 determines whether or not the baggage delivery is completed (step S106). More specifically, the delivery flag management unit 130 makes an inquiry to the transport management server 500 to obtain the delivery status. The delivery flag management unit 130 determines that "the delivery is completed" when the delivery status is delivery-completed, and determines that "the delivery is not completed" in the other situations (e.g., during delivery or not delivered yet, etc.). When it is determined that the delivery is completed (the step S106: YES), the delivery flag management unit 130 gives the delivery completion flag to the accommodation information corresponding to the customer (step S107). That is, the delivery completion flag is set to ON to update the accommodation information. On the other hand, when it is determined that the delivery is not completed (the step S106: NO), the delivery flag management unit 130 performs the step S106 again after a lapse of a predetermined period.

### (Check-in Operation)

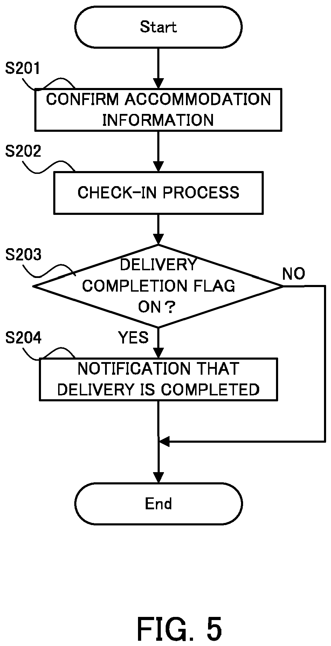

Next, a specific operation of check-in by the baggage delivery system 1 according to the first example embodiment will be described with reference to FIG. 5. FIG. 5 is a flowchart illustrating a flow of the operation of check-in by the baggage delivery system according to the first example embodiment.

As illustrated in FIG. 5, when the customer checks in at the hotel, the accommodation information confirmation unit 310 firstly confirms the accommodation information about the customer (step S201). After the accommodation information is confirmed, the check-in processing unit 320 performs the check-in process on the basis of the accommodation information (step S202).

When the check-in process is completed, the delivery status notification unit 330 determines whether or not the delivery completion flag in the customer's accommodation information is ON (step S203). When the delivery completion flag is ON (the step S203: YES), the delivery status notification unit 330 gives the notification that the baggage delivery is completed (step S204). On the other hand, when the delivery completion flag is not ON (the step S203: NO), the delivery status notification unit 330 does not give the notification that the baggage delivery is completed (i.e., the step S204 is omitted). The step S203 and the step S204 may be performed before the step S202 (i.e., the check-in process), or may be performed in parallel during execution of the step S202.

Incidentally, when the baggage delivery is not completed at the time of the customer's check-in, the process may be restarted from the step S203 at intervals of predetermined periods even after that. In this way, it is determined that the delivery completion flag is ON at a timing when the baggage delivery is completed (the step S203: YES), and the customer or the hotel staff is notified that the baggage delivery is completed (the step S204).

### (Checkout Operation)

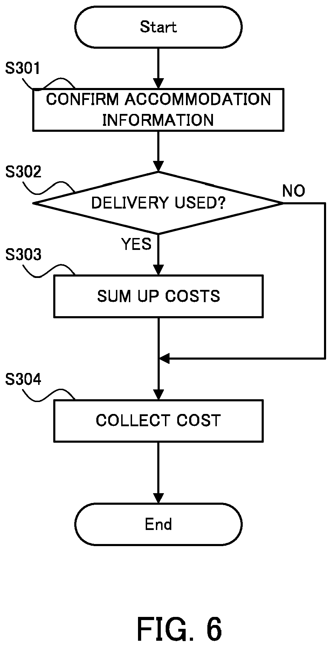

Next, a specific operation of checkout by the baggage delivery system 1 according to the first example embodiment will be described with reference to FIG. 6. FIG. 6 is a flowchart illustrating a flow of the operation of checkout by the baggage delivery system according to the first example embodiment.

As illustrated in FIG. 6, when the customer checks out from the hotel, the accommodation information confirmation unit 310 firstly confirms the accommodation information about the customer (step S301). Then, the cost collection unit 340 determines whether or not the customer has used the baggage delivery on the basis of the customer's accommodation information (step S302). Incidentally, whether or not the customer has used the baggage delivery can be determined by whether or not the delivery completion flag in the accommodation information is ON. Alternatively, when the baggage is actually handed over to the customer, another flag (i.e., a flag indicating that the customer has used the delivery and has received the baggage) may be given to the accommodation information, and it may be determined from the flag.

When the customer has used the delivery (the step S302: YES), the cost collection unit 340 adds the delivery cost to the cost incurred at the hotel (step S303) and collects the total cost from the customer (step S304). Specifically, when the delivery completion flag is ON, the cost collection unit 340 calculates the total cost obtained by summing up the cost incurred at the hotel and the delivery cost. Then, the cost collection unit 340 collects the calculated total cost from the customer who checks out. In the case of a prepaid hotel, only the delivery cost may be collected. Alternatively, if an additional cost is incurred at the hotel, the total cost obtained by summing up the additional cost and the delivery cost may be collected from the customer who checks out. When the customer moves to another place after checkout, the procedure for delivering the baggage may be performed again at the time of checkout. On the other hand, when the customer has not used the delivery (step S302:NO), the cost collection unit 340 omits the step S303 described above and collects only the cost incurred at the hotel from the customer (the step S304). Specifically, when the delivery completion flag is OFF, the cost collection unit 340 may collect only the cost incurred at the hotel from the customer without summing up the cost incurred at the hotel and the delivery cost.

### (Technical Effect)

Next, a technical effect obtained by the baggage delivery system 1 according to the first example embodiment will be described.

As described in FIG. 1 to FIG. 6, according to the baggage delivery system 1 in the first example embodiment, it is possible to properly deliver the baggage of the customer who uses the facility, to the customer's accommodations. In a transportation hub, such as an airport, the customer often has large baggage, and the delivery of the baggage to the accommodations can significantly reduce the customer's burden.

Especially in this example embodiment, since the delivery completion flag given to the accommodation information can be used to confirm whether or not the baggage delivery is completed, it is possible to accurately recognize the delivery status of the baggage. Furthermore, it is possible to properly deliver the baggage to the customer by giving the notification that the baggage delivery is completed when the customer checks in.

Incidentally, the baggage delivery cost is collected together with the accommodation fee of the hotel or the like, as already explained. Therefore, the facility that keeps the baggage or the transport company that performs the delivery operation does not need to collect the delivery cost directly from the customer. In addition, it is possible to reduce the customer's labor because the delivery cost can be paid together with the accommodation fee or the like.

### <Second Example Embodiment>

Next, the baggage delivery system 1 according to a second example embodiment will be described. The second example embodiment is partially different from the first example embodiment described above only in the operation, and is substantially the same in the other part. Therefore, the parts that differ from the first example embodiment will be described in detail below, and the other overlapping part will not be explained.

### (Operation of Baggage Delivery)

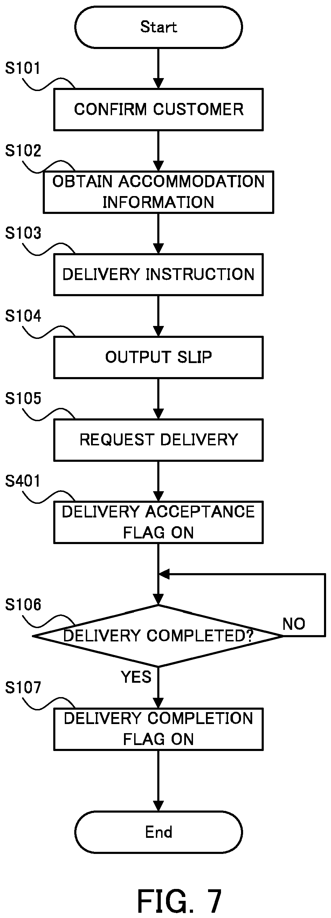

Firstly, a specific operation of baggage delivery by the baggage delivery system 1 according to the second example embodiment will be described with reference to FIG. 7. FIG. 7 is a flowchart illustrating a flow of the operation of baggage delivery by the baggage delivery system according to the second example embodiment. Incidentally, in FIG. 7, the same steps as those illustrated in FIG. 4 carry the same reference numerals.

As illustrated in FIG. 7, in the baggage delivery system 1 according to the second example embodiment, firstly, the step S101 to the step S105 are performed as in the first example embodiment. Especially in the second example embodiment, after a delivery request of the baggage is made, the delivery flag management unit 130 gives a delivery acceptance flag indicating that the delivery of the baggage is accepted from the customer, to the customer's accommodation information (step S401). That is, the delivery acceptance flag is set to ON to update the accommodation information.

Then, as in the first example embodiment, the step S106 and the step S105 are performed. As described above, the delivery flag management unit 130 according to the second example embodiment is configured to give the delivery acceptance flag in addition to the delivery completion flag.

### (Check-in Operation)

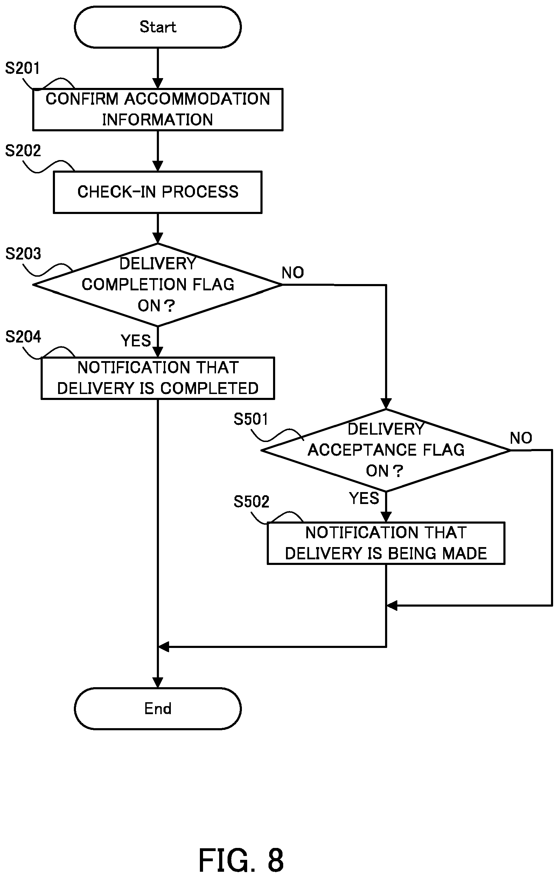

Next, a specific operation of check-in by the baggage delivery system 1 according to the second example embodiment will be described with reference to FIG. 8. FIG. 8 is a flowchart illustrating a flow of the operation of check-in by the baggage delivery system according to the second example embodiment. Incidentally, in FIG. 8, the same steps as those illustrated in FIG. 5 carry the same reference numerals.

As illustrated in FIG. 8, in the baggage delivery system 1 according to the second example embodiment, when the customer checks in, the step 201 to the step S204 are performed as in the first example embodiment. That is, when the delivery completion flag is ON after the check-in process (the step S203: YES), the notification that the baggage delivery is completed is given (the step S204).

Especially in the second example embodiment, when the delivery completion flag is not ON (the step S203: NO), the delivery status notification unit 330 determines whether or not the delivery acceptance flag in the customer's accommodation information is ON (step S501). When the delivery acceptance flag is ON (the step S501: YES), the delivery status notification unit 330 gives a notification that the baggage delivery is successfully accepted (step S502). On the other hand, when the delivery acceptance flag is not ON (the step S501: NO), the delivery status notification unit 330 does not give the notification that the baggage delivery is successfully accepted (i.e., the step S502 is omitted).

### (Technical Effect)

Next, a technical effect obtained by the baggage delivery system 1 according to the second example embodiment will be described.

As described in FIG. 7 and FIG. 8, according to the baggage delivery system 1 in the second example embodiment, when the delivery request is completed to the transport company, the delivery acceptance flag is given to the customer's accommodation information. This allows the customer or a staff of the accommodations to more accurately recognize the delivery status of the baggage. Specifically, it is possible to confirm whether or not the baggage delivery is successfully accepted when the baggage delivery is not completed. This makes it possible to know the details of the delivery status, which are, for example, whether the transport company is still delivering the baggage, or whether the baggage delivery is not accepted due to some mistake, when the baggage delivery is not completed.

Although the second example embodiment exemplifies that the delivery status notification unit 330 gives both the delivery acceptance flag and the delivery completion flag, the delivery status notification unit 330 may give only the delivery acceptance flag. That is, a notification of whether or not the delivery is successfully accepted may be given without a notification of whether or not the baggage delivery is completed.

### <Supplementary Notes>

With respect to the example embodiment described above, further discloses the following Supplementary Notes will be further disclosed.

### (Supplementary Note 1)

A baggage delivery system described in Supplementary Note 1 is a baggage delivery system including: an acquisition unit that obtains an accommodation information about accommodations of a customer on the basis of a customer information, which is information about the customer who uses a facility; a delivery unit that performs a procedure for delivering baggage of the customer from the facility to the accommodations on the basis of the accommodation information; and a giving unit that gives a completion information indicating that delivery of the baggage is completed, to the accommodation information, when the delivery of the baggage to the accommodations is completed.

### (Supplementary Note 2)

A baggage delivery system described in Supplementary Note 2 is the baggage delivery system described in Supplementary Note 1, wherein the delivery unit outputs a delivery slip on the basis of the accommodation information and performs the procedure for delivering the baggage by using the delivery slip.

### (Supplementary Note 3)

A baggage delivery system described in Supplementary Note 3 is the baggage delivery system described in Supplementary Note 1 or 2, further including a notification unit that gives a notification that the delivery of the baggage is completed when the completion information is given to the accommodation information and when the customer checks in at the accommodations.

### (Supplementary Note 4)

A baggage delivery system described in Supplementary Note 4 is the baggage delivery system described in any one of Supplementary Notes 1 to 3, further including a collection unit that collects a cost for the delivery of the baggage at the accommodations.

### (Supplementary Note 5)

A baggage delivery system described in Supplementary Note 5 is the baggage delivery system described in any one of Supplementary Notes 1 to 4, further including a second giving unit that gives an acceptance information indicating that the delivery of the baggage is accepted, to the accommodation information, when the delivery of the baggage is accepted at the facility.

### (Supplementary Note 6)

A baggage delivery system described in Supplementary Note 6 is the baggage delivery system described in any one of Supplementary Notes 1 to 5, wherein the acquisition unit identifies the customer by face authentication and obtains the accommodation information on the basis of the customer information about the identified customer.

### (Supplementary Note 7)

A baggage delivery system described in Supplementary Note 7 is the baggage delivery system described in any one of Supplementary Notes 1 to 6, wherein the facility is a transportation hub.

### (Supplementary Note 8)

A baggage delivery management apparatus described in Supplementary Note 8 is a baggage delivery management apparatus including: an acquisition unit that obtains an accommodation information about accommodations of a customer on the basis of a customer information, which is information about the customer who uses a facility; a delivery instruction unit that outputs an instruction to perform a procedure for delivering baggage of the customer from the facility to the accommodations on the basis of the accommodation information; and a giving unit that gives a completion information indicating that delivery of the baggage is completed, to the accommodation information, when the delivery of the baggage to the accommodations is completed.

### (Supplementary Note 9)

A baggage delivery method described in Supplementary Note 9 is a baggage delivery method including: obtaining an accommodation information about accommodations of a customer on the basis of a customer information, which is information about the customer who uses a facility; performing a procedure for delivering baggage of the customer from the facility to the accommodations on the basis of the accommodation information; and giving a completion information indicating that delivery of the baggage is completed, to the accommodation information, when the delivery of the baggage to the accommodations is completed.

### (Supplementary Note 10)

A computer program described in Supplementary Note 10 is a computer program that operates a computer: to obtain an accommodation information about accommodations of a customer on the basis of a customer information, which is information about the customer who uses a facility; to perform a procedure for delivering baggage of the customer from the facility to the accommodations on the basis of the accommodation information; and to give a completion information indicating that delivery of the baggage is completed, to the accommodation information, when the delivery of the baggage to the accommodations is completed.

### (Supplementary Note 11)

Arecording medium described in Supplementary Note 11 is a recording medium on which the computer program described in Supplementary Note 10 is recorded.

The present invention is not limited to the examples described above and is allowed to be changed, if desired, without departing from the essence or spirit of the invention which can be read from the claims and the entire specification. A baggage delivery system, a baggage delivery management apparatus, a baggage delivery method, and a computer program with such modifications are also intended to be within the technical scope of this disclosure.

To the extent permitted by law, this application is based upon and claims the benefit of priority from Japanese Patent Application No. 2019-198877, filed October 31, 2019, and incorporates all of its disclosure herein. Also, to the extent permitted by law, all the publications and articles described in the description are incorporated herein by reference.

### Description of Reference Codes

1 Baggage delivery system
10 Baggage delivery management apparatus
20 Facility-side apparatus
30 Hotel-side apparatus
50 Accommodation information database
110 Accommodation information acquisition unit
120 Delivery instruction unit
130 Delivery flag management unit
210 Customer confirmation unit
220 Slip output unit
310 Accommodation information confirmation unit
320 Check-in processing unit
330 Delivery status notification unit
340 Cost collection unit
500 Transport management server

## Claims

1. A baggage delivery system comprising:
an acquisition unit that obtains an accommodation information about accommodations of a customer on the basis of a customer information, which is information about the customer who uses a facility;
a delivery unit that performs a procedure for delivering baggage of the customer from the facility to the accommodations on the basis of the accommodation information; and
a giving unit that gives a completion information indicating that delivery of the baggage is completed, to the accommodation information, when the delivery of the baggage to the accommodations is completed.

2. The baggage delivery system according to claim 1, wherein the delivery unit outputs a delivery slip on the basis of the accommodation information and performs the procedure for delivering the baggage by using the delivery slip.

3. The baggage delivery system according to claim 1 or 2, further comprising a notification unit that gives a notification that the delivery of the baggage is completed when the completion information is given to the accommodation information and when the customer checks in at the accommodations.

4. The baggage delivery system according to any one of claims 1 to 3, further comprising a collection unit that collects a cost for the delivery of the baggage at the accommodations.

5. The baggage delivery system according to any one of claims 1 to 4, further comprising a second giving unit that gives an acceptance information indicating that the delivery of the baggage is accepted, to the accommodation information, when the delivery of the baggage is accepted at the facility.

6. The baggage delivery system according to any one of claims 1 to 5, wherein the acquisition unit identifies the customer by face authentication and obtains the accommodation information on the basis of the customer information about the identified customer.

7. The baggage delivery system according to any one of claims 1 to 6, wherein the facility is a transportation hub.

8. A baggage delivery management apparatus comprising:
an acquisition unit that obtains an accommodation information about accommodations of a customer on the basis of a customer information, which is information about the customer who uses a facility;
a delivery instruction unit that outputs an instruction to perform a procedure for delivering baggage of the customer from the facility to the accommodations on the basis of the accommodation information; and
a giving unit that gives a completion information indicating that delivery of the baggage is completed, to the accommodation information, when the delivery of the baggage to the accommodations is completed.

9. A baggage delivery method comprising:
obtaining an accommodation information about accommodations of a customer on the basis of a customer information, which is information about the customer who uses a facility;
performing a procedure for delivering baggage of the customer from the facility to the accommodations on the basis of the accommodation information; and
giving a completion information indicating that delivery of the baggage is completed, to the accommodation information, when the delivery of the baggage to the accommodations is completed.

10. A computer program that operates a computer:
to obtain an accommodation information about accommodations of a customer on the basis of a customer information, which is information about the customer who uses a facility;
to perform a procedure for delivering baggage of the customer from the facility to the accommodations on the basis of the accommodation information; and
to give a completion information indicating that delivery of the baggage is completed, to the accommodation information, when the delivery of the baggage to the accommodations is completed.
